Europäisches Patentamt

European Patent Office

Office européen des brevets

(11) Publication number: **0 312 680**
A1

# EUROPEAN PATENT APPLICATION

(21) Application number: 88104435.8

(22) Date of filing: 19.03.88

(51) Int. Cl.⁴: **A21C 11/10 , B26D 7/18**

(30) Priority: 21.10.87 IT 2235787

(43) Date of publication of application:
26.04.89 Bulletin 89/17

(84) Designated Contracting States:
AT BE CH DE ES FR GB GR LI LU NL SE

(71) Applicant: SA.MA. S.r.l.
Via Brescia, 9
I-20060 Pozzuolo Martesana (Milano)(IT)

(72) Inventor: Sancini, Luigi
via Mozart, 3
Cassano D'Adda (Milano)(IT)
Inventor: Mauri, Giuseppe
P.zza XXV Aprile,
4-Melzo (Milano)(IT)

(74) Representative: Lecce, Giovanni
Dott. Giovanni Lecce & C. S.r.l. Via G. Negri
10
I-20123 Milano(IT)

(54) Automatic device for the punching, extraction and positioning of portions of food products.

(57) Automatic device for the punching, extraction and positioning of portions (7) of food products, in particular filled confectionery products, comprising a piston (6) sliding in a tube (5), equipped at the lower end with curved flexible needles (3), which, extending to the exterior through guide ducts (13) positioned radially towards the exterior, couple portions of food products (7) obtained by cutting by a punch (2) coaxial to said piston. A control plate (1), which supports the punch (2), extracts and positions each portion of food product (7), punched and coupled to the needles (3), in the container.

FIG.1

EP 0 312 680 A1

# AUTOMATIC DEVICE FOR THE PUNCHING, EXTRACTION AND POSITIONING OF PORTIONS OF FOOD PRODUCTS

This invention refers to an automatic device for the punching, extraction and positioning of portions of food products. More in particular, this invention refers to an automatic device for the punching, extraction and positioning of portions of confectionery products, in particular filled confectionery products.

As noted, to prepare portions of food products, in particular confectionery products, the raw material, in uniform, continuous layers, is sent to cutting and/or punching machines, after which the various slices, already shaped to size and desired shape, are withdrawn manually, or by means of needle extractors and distributed and set apart on planes, possibly mobile, for subsequent processings in packing machines.

The above procedure, while valid for certain products and/or piece sizes of products, is not suitable to be used to produce portions of filled cakes, e.g. snacks and similar, packed in preshaped containers.

In these cases, in fact, the portions of food products, e.g. sponge cake or similar, must be positioned in the centre of the preshaped containers, to permit, in the subsequent preparation phases, uniform stratified and peripheral distribution of the cream, jam, chocolate and similar.

With the present automatic means, it is not possible to carry out the above operation so the above products are now obtained by means of very long, expensive manual manipulations.

The object of this invention is to solve these problems. More in particular, the object of this invention is to provide a device which makes it possible to carry out continuously and automatically the punching, extraction and positioning of portions of filled confectionery products.

According to this invention, this and other objects, shown in the following description, are obtained by means of a device comprising:
- a pneumatic or hydraulic piston, equipped, at the lower end facing the product to be punched and/or cut, a number of flexible peripheral needles, preferably positioned along a round crown and free to slide in oblique guide ducts positioned radially towards the exterior and obtained on a fixed die;
- a tube, in which the pneumatic piston slides, equipped, at the upper end, with a stop punch, supporting, at the lower end, the fixed die; and
- a control plate provided, on the side facing the product to be punched, an interchangeable punch, fixed to a bush which slides along the tube; said punch, plate and bush being coaxial with the piston.

The pneumatic or hydraulic piston may be of simple effect, and, in this case, an elastic means, e.g. a spring, returns the piston to the raised position. Preferably, the elastic means is positioned inside the tube where the piston slides, between said piston and the fixed die.

Alternatively, the pneumatic or hydraulic piston may have double effect, and, in this case, the elastic means may be omitted.

The device of this invention can be used alone or coupled to other similar devices positioned in orthogonal series. The food product to be punched and positioned is fed to the device of this invention by a conventional conveyor belt or similar device with intermittent feed.

Through the automatic device of this invention, the layer of food product to be treated is punched, coupled, collected and placed inside the preshaped containers and positioned with respect to pre-established coordinates, in completely automatic manner, without any manual intervention. The above operations take place in decidedly limited times and positionings are precise and constant along the working cycles.

The advantages of the device of this invention mainly consist in the fact that the end products obtained by said centering procedure are perfect in both the shape and distribution of the various portions and the total automation of the phases makes it possible to improve and greatly increase production cycles.

The invention can be more clearly understood from the following detailed description, in which reference is made to the enclosed figures which show a preferred but not binding con structive example of this invention, and in which:

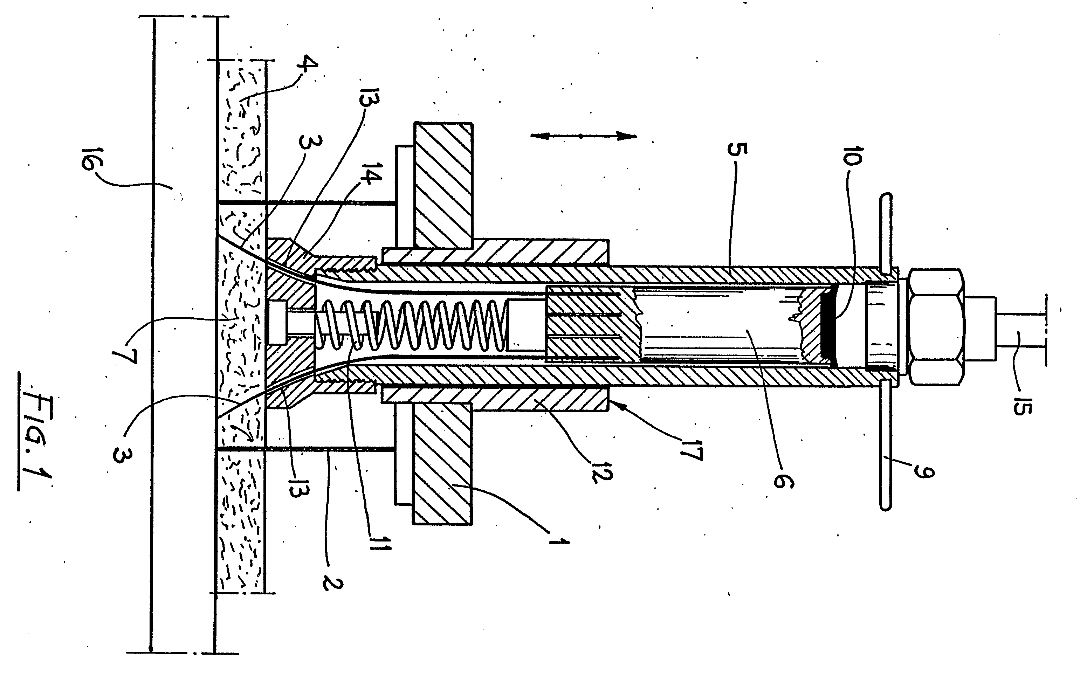

fig. 1 shows the schematic view of the cross-section of the device of this invention during the first phase of work, i.e. during the punching and coupling of the cut portion;

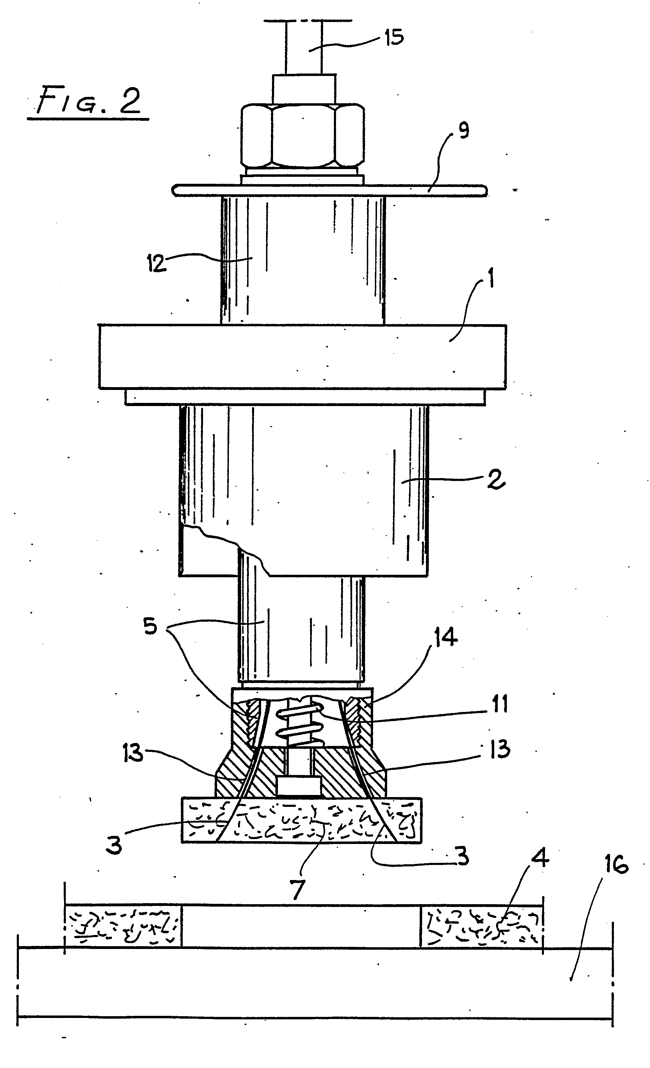

fig. 2 shows the perspective view, partially divided, of the device in fig. 1 during the second phase of work, consisting in the extraction and collection of the punched portion, and

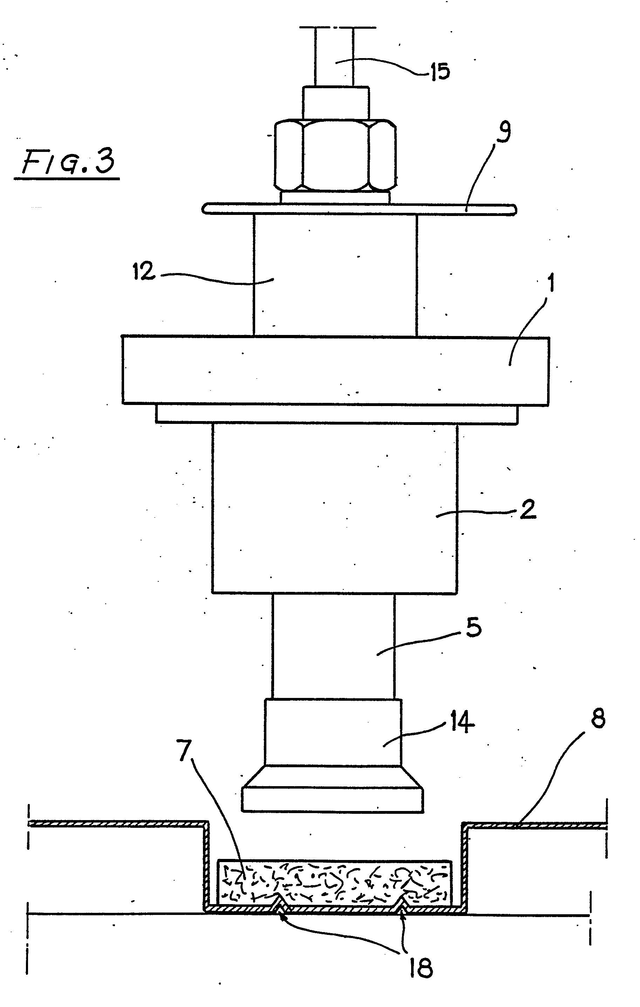

fig. 3 shows the perspective view of the device in the previous figures during the third phase of work, consisting in the depositing of the punched portion in preshaped container.

With reference to the drawings, the automatic device for the punching, extraction and positioning of portions of food products of this invention mainly comprise a control plate (1) on which is fixed an interchangeable punch (2) and a coaxial bush (12), inside which is free to slide a tube (5) of a piston (6).

The piston (6), preferably of pneumatic type, is fitted on the top with gasket (12) and at the bottom with a number of flexible needles (3), which, extending downwards, are inserted in guide ducts (13), oblique, positioned in radial direction towards the exterior, obtained in the thickness of a lower die (14), fixed to the end of said tube (5).

The flexible needles (3) are positioned along a circular peripheral crown of the piston (6).

For simplicity and constructive economy, the piston (6) is preferably with simple effect, driven by compressed air arriving through the upper duct (15), while, for the return or contrasting action, it is equipped with a return spring (11), inserted in the tube (5) between piston (6) and die (14). During operation, the food product (4), in continuous layers or with desired band width, to be punched and positioned, is fed by a standard continuous conveyor belt, or similar device (16), with intermittent feed.

The moment feed stops, the control plane (1) drops, bringing first the base of the die (14) into contact with the surface of the food product (4). Said plane (1) then continues to drop until it reaches its lower limit stop, during which the underlying food product (4) is completely cut for penetration of the punch (2).

After punching, compressed air is issued by the upper duct (15), which, acting on the gasket (10), pushes the piston (6) downwards, overcoming the resistance of the spring (11). During the downstroke of the piston, the flexible needles (3), guided in the ducts (13), are pushed beyond the base of the die (14), screwed to the lower end of the tube (5), and are wedged in the zone of food product (4), which, at that moment, is located below the device.

Thanks to the oblique or curved position, radially facing the exterior of the guide ducts (13), the flexible needles are embedded in said underlying zone of product (4) in divergent way, coupling themselves firmly to same.

The punching phase, in which complete cutting is carried out of the underlying zone of food product (4), forming the portion (7), takes place before immersion of the needles (3), which penetrate the product when the piston (6) is at lower limit stop.

Subsequently, the control plate (1) reverses movement and rises, extracting first the punch (2) from the food product (4). When the upper striker (17) of the coaxial bush (12) is engated with the upper stop yoke (9), positioned in the top part of the tube (5), also the tube (5) to whose lower end the die (14) is connected, is raised.

Due to the extension in radial direction of the needles (3) embedded in the portion of food product (7), the latter is raised and extracted from the rest of the product (4), remaining in adherence to the base of the above die (14).

At this point, the rest of the product (4) can advance, while the cutting and coupling device, described above, can be made rotate or traverse and aligned to the following work station, in which the portion (7), fixed to it, must be deposited. In a machine for production in series, at least two series of aligned automatic devices can be present, positioned at right angles to one another and applied to a drive head with rotary or alkternate traverse motion.

In this way, when a series of devices is in punching and coupling phase, the other series is in positioning and detachment phase of the portions (7).

In the latter phase, the control plate (1) again drops together with the tube (5) until it brings the portion (7) of product into contact with the plane on which it must be deposited, e.g. the base of a preshaped container (8).

At this point, the compressed air is discharged, so that the piston (6) is pushed upwards by the return spring (11), no longer compressed.

With return of the piston (6), also the flexible needles (3) are recalled and are removed from the portion (7) to re-enter the lower die (14).

When the needles (3) have re-entered, the portion (7) is freed, and, when the control plane (1) rerises, dragging with it the tube (5) and the die (14), it remains deposited in the desired position.

In the specific case of deposit in preshaped containers (8), they may also be equipped with pointed projections (18), against which, during deposit, the punched portions (7) of food product are fixed and stably centered with respect to the seat of said containers.

In this way, after deposit, the portions (7) do not move from their position and the preshaped containers (8) can pass to subsequent processings, e.g. the dosing of cream, chocolate, jam and similar, with the certainty that the working phase will take place in the best time, with regular distribution of the above products also along the peripheral hollow spaces, according to the best solutions particularly preferred by the producers of confectionery and similar.

Since the positioning coordinates are, however, very precise, thanks to the multicoupling system with the peripheral needles (3), with radial opening towards the exterior, also the overlapping of different portions with interposition of cream and similar is very precise and in accordance with the objects and intentions of the confectionery procedure.

Claims

1) Automatic device for the punching, extraction and positioning of food portions, in particular filled confectionery products, comprising:
- a piston (6), pneumatic or hydraulic, equipped, at the lower end facing the product to be punched (4) a number of lower peripheral needles (3), flexible and free to slide in oblique or curved guide ducts (13) placed radially towards the exterior and obtained on a fixed die (14);
- a tube (5), in which the piston (6) slides, equipped, at the upper end, with a stop punch (9) and supporting, at the opposite end, facing the product to be punched (4), the fixed die (14); and
- a control plate (1), equipped, on the side facing the product to be punched (4), an interchangeable punch (2), fixed to a bush (12) which slides along the tube (5); said punch (2), plate (1) and bush (12) being coaxial with the piston (6).

2) Automatic device according to claim 1, in which the flexible needles (13) are positioned along a circular crown.

3) Automatic device according to claim 2, in which the curved guide contacts (13) are positioned along a circular crown of the die (14).

4) Automatic device according to any one of the previous claims in which the piston (6) is of pneumatic type with simple effect, and a return spring (11) is placed between the piston (6) and die (14).

5) Automatic device according to any of the previous claims 1 to 3, in which the piston (6) is with double effect.

6) Automatic device according to any one of the previous claims in which the punch (2) is interchangeable.

7) Automatic device according to any of the previous claims, in which a gasket (10) is placed above the piston (6).

8) Automatic device according to any of the previous claims, in which a number of similar devices are coupled in series, positioned at right angles and applied to a same control head.

9) Automatic device according to any of the previous claims in which the punching means (2), the coupling and decoupling means (3) and extraction and positioning means (6) and (11), for portions of food products (7), act sequentially and automatically.

FIG. 1

_Fig.2_

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 346 242 (C.G. TURNER) <br> * Page 2, lines 19-39; page 2, line 66 - page 3, line 35; figures 4-7 * | 1 | A 21 C 11/10 <br> B 26 D 7/18 |
| A | US-A-3 963 402 (P. BERTA) <br> * Column 2, line 45 - column 3, line 65; figures 2-7 * | 1,4,5 | |

TECHNICAL FIELDS
SEARCHED (Int. Cl.4)

A 21 C
B 26 D

The present search report has been drawn up for all claims

| Place of search | Date of completion of the search | Examiner |
|---|---|---|
| THE HAGUE | 18-01-1989 | FRANKS N.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document